# EUROPÄISCHE PATENTANMELDUNG

(11) **EP 4 521 729 A1**
(43) Veröffentlichungstag der Anmeldung: **12.03.2025**
(21) Anmeldenummer: 24195640.8
(22) Anmeldetag: 21.08.2024
(51) Int. Cl.: H04M 15/00, H04L 41/0896, H04L 47/70

(54) **VERFAHREN ZUR STEUERUNG EINER VERFÜGBAREN DATENMENGE**

(30) Priorität: 05.09.2023 DE 102023208555
(71) Anmelder: Siemens Mobility GmbH, 81739 München (DE)
(72) Erfinder: Umbach, Rainer, 90556 Seukendorf (DE)
(74) Vertreter: Siemens Patent Attorneys

(57) **Zusammenfassung**

Die Erfindung betrifft ein Verfahren (100a, 100b) zur Steuerung einer einem Fahrzeug (10) zum Zwecke einer mobilen Kommunikation mit einer vorbestimmten Datenübertragungsgeschwindigkeit zur Verfügung stehenden Datenmenge. Hierzu wird eine Information betreffend eine bereits zum Zwecke der mobilen Kommunikation angefallene Datenmenge erfasst (102). Auf Basis der erfassten (102) Information wird eine Größe der zur Verfügung stehenden Datenmenge angepasst (104).

## Beschreibung

Die Erfindung betrifft ein Verfahren, ein Fahrzeug, ein System, ein Computerprogramm sowie ein computerlesbares Medium.

Um einen Zugang zu einem Mobilfunknetz zu erhalten, werden von Telekommunikationsdiensteanbieter, welche mitunter als Provider bezeichnet werden, in der Regel verschiedene Tarifstufen angeboten. Zumeist richten sich diese Tarifstufen dabei nach einer mit einer vorbestimmten Übertragungsgeschwindigkeit verknüpften begrenzten Datenmenge. Betreiber von Fahrzeugen stehen daher vor der Entscheidung, eine adäquate Tarifstufe auszuwählen, um eine hinreichend zuverlässige mobile Kommunikation derer Fahrzeuge gewährleisten zu können. Damit eine verfügbare Datenmenge für alle wahrscheinlich anfallenden mobilen Kombinationsvorgänge ausreicht, werden bislang Überkapazitäten vorgesehen. Wird dennoch während eines Betriebs eines Fahrzeugs festgestellt, dass die gewählte Datenmenge nicht ausreichend ist, so wird zumeist eine höhere Tarifstufe gewählt. Beispielsweise werden dann überverhältnismäßig große oder gar unbegrenzte mit einer vorgegebenen Übertragungsgeschwindigkeit verknüpfte Datenmengen gewählt. Dadurch kann zwar für verschiedenste Kommunikationsvorgänge eine möglichst hohe Übertragungsgeschwindigkeit bereitgestellt werden. Allerdings verbleiben dadurch häufig große Teile an einer zur Verfügung stehenden Datenmenge ungenutzt. Diese Fallgestaltung wird von Betreibern der Fahrzeuge in der Regel bevorzugt. Anderenfalls bestünde nämlich die Gefahr, dass eine Übertragungsgeschwindigkeit infolge einer Überschreitung der zur Verfügung stehenden Datenmenge beschränkt wird. Eine solche Beschränkung der Übertragungsgeschwindigkeit kann jedoch zu einer erheblichen Einschränkung der mobilen Kommunikationsfähigkeit eines betroffenen Fahrzeugs führen. Im Einzelfall kann dies möglicherweise sogar ein Sicherheitsrisiko für das Fahrzeug darstellen.

Der Erfindung liegt die Aufgabe zugrunde, eine Steuerung einer zum Zwecke einer mobilen Kommunikation mit einer vorbestimmten Übertragungsgeschwindigkeit zur Verfügung stehenden Datenmenge zu verbessern.

Diese Aufgabe wird gelöst durch ein Verfahren mit den Merkmalen des Anspruchs 1.

Des Weiteren wird diese Aufgabe gelöst durch ein Fahrzeug mit den Merkmalen des nebengeordneten Fahrzeuganspruchs sowie durch ein System mit den Merkmalen des nebengeordneten Systemanspruchs.

Ferner liegt der Erfindung die Aufgabe zugrunde, ein Computerprogramm sowie ein computerlesbares Medium anzugeben.

Diese Aufgaben werden gelöst mittels eines Computerprogramms mit den Merkmalen des nebengeordneten Computerprogrammanspruchs sowie durch ein computerlesbares Medium mit den Merkmalen des Anspruchs 15.

Vorteilhafte Weiterbildungen sind jeweils Gegenstand abhängiger Unteransprüche.

Bei dem erfindungsgemäßen Verfahren wird eine einem Fahrzeug zum Zwecke einer mobilen Kommunikation mit einer vorbestimmten Übertragungsgeschwindigkeit zur Verfügung stehende Datenmenge gesteuert. Hierzu wird eine Information betreffend eine bereits zum Zwecke der mobilen Kommunikation angefallene Datenmenge erfasst. Auf Basis der erfassten Information wird eine Größe der zur Verfügung stehenden Datenmenge angepasst. Insbesondere handelt es sich bei dem erfindungsgemäßen Verfahren um ein computerimplementiertes Verfahren. Vorzugsweise wird als Fahrzeug ein schienengebundenes Fahrzeug vorgesehen.

Das erfindungsgemäße Verfahren ermöglicht eine bedarfsgerechte und effiziente Anpassung der zur Verfügung stehenden Datenmenge. Dadurch kann ausgehend von einer zunächst geringen zur Verfügung stehenden Datenmenge eine flexible Anpassung der Datenmenge an einen wechselnden Bedarf angepasst werden.

In einer vorteilhaften Weiterbildung wird die Größe der zur Verfügung stehenden Datenmenge für die Dauer eines begrenzten Zeitraums angepasst. Vorzugsweise wird die Größe der zur Verfügung stehenden Datenmenge für die Dauer einer Woche, eines Monats oder bis zu einem Ablauf eines Abrechnungszeitraums angepasst. Dadurch kann vermieden werden, dass große Teile einer zur Verfügung stehenden Datenmenge ungenutzt verfallen. Des Weiteren kann dadurch eine standardmäßig zur Verfügung stehende Datenmenge kleingehalten werden. Im Falle von selten anfallenden oder unregelmäßig anfallenden zu übertragenden großen Datenmengen kann des Weiteren eine Verringerung einer Übertragungsgeschwindigkeit verhindert werden. Eine damit einhergehende Einschränkung der mobilen Kommunikation des Fahrzeugs kann dadurch zuverlässig vermieden werden.

In einer weiteren vorteilhaften Weiterbildung wird im Falle, dass die bereits zum Zwecke der mobilen Kommunikation angefallene Datenmenge einen Grenzwert überschreitet, die zur Verfügung stehende Datenmenge vergrößert. Dadurch kann bereits vor einem Aufbrauch der zur Verfügung stehenden Datenmenge dieselbe erweitert werden. Dadurch kann ein betriebssicheres Steuerungsverfahren bereitgestellt werden.

Ferner sieht eine vorteilhafte Weiterbildung vor, dass die Größe der Datenmenge mittels einer Anwendungsschnittstelle eines Providers angepasst wird. Bei der Anwendungsschnittstelle handelt es sich vorliegend um eine Schnittstelle zur Programmierung von Anwendungen, welche häufig auch kurz als API bezeichnet wird. Dies ermöglicht eine automatisierte Steuerung der zur Verfügung stehenden Datenmenge.

Des Weiteren sieht eine vorteilhafte Weiterbildung vor, dass die Größe der zur Verfügung stehenden Datenmenge mittels einer Kurzmitteilung angepasst wird. Vorzugsweise wird die zur Verfügung stehende Datenmenge mittels einer an einen Provider übersandten Kurzmitteilung angepasst. Dadurch kann ein einfaches und effizientes Steuerungsverfahren bereitgestellt werden. Bei der genannten Kurzmitteilung handelt es sich insbesondere um eine Textnachricht. Bevorzugterweise wird diese Kurzmitteilung mittels GSM-Mobilfunk übermittelt. Dadurch kann eine Betriebssicherheit des Verfahrens weiter erhöht werden.

Eine andere vorteilhafte Weiterbildung sieht vor, dass ein zukünftiger Bedarf einer zum Zwecke der mobilen Kommunikation erforderlichen Datenmenge prognostiziert wird. Auf Basis des prognostizierten zukünftigen Bedarfs der erforderlichen Datenmenge sowie der ermittelten Information wird die Größe der zur Verfügung stehenden Datenmenge angepasst. Dies ermöglicht es auf einfache Weise abzuschätzen, um welche Datenmenge die bereits zur Verfügung stehende Datenmenge erhöht werden soll. Beispielsweise kann der zukünftige Bedarf auf Basis eines Einsatzplans, eines Dienstplans, eines Serviceplans, eines Wartungsplans und/oder eines Fahrplans betreffend das Fahrzeug prognostiziert werden.

Bei einer alternativen oder zusätzlichen vorteilhaften Weiterbildung wird die erfasste Information an einen stationären Server ausgegeben. Ausgehend von dem stationären Server wird auf Basis der erfassten Information die Größe der Datenmenge angepasst. Dies ermöglicht es einem Betreiber des Fahrzeugs, auf einfache Weise eine Übersicht betreffend eine zum Zwecke der mobilen Kommunikation bereits angefallene Datenmenge zu erhalten. Des Weiteren kann auf diese Weise ein Freigabeschritt vorgesehen werden. Dadurch kann ein zwar grundsätzlich automatisiertes Steuerungsverfahren um eine Entscheidungskompetenz des Betreibers erweitert werden.

Ferner sieht eine vorteilhafte Weiterbildung vor, dass die genannte Information mittels einer webschnittstellen basierten Abfrage erfasst wird. Vorzugsweise erfolgt die webschnittstellen basierte Abfrage bei einem zugehörigen Provider. Auf diese Weise kann einfach und zuverlässig auf bereits vorhandene Informationen betreffend den bislang angefallenen Datenverbrauch zurückgegriffen werden. Auf ein lokales Erfassen, Verarbeiten und Speichern von Informationen betreffend die bereits angefallenen Datenmengen kann dadurch verzichtet werden.

Des Weiteren wird als vorteilhafte Weiterbildung vorgeschlagen, dass als die genannte Information eine Mitteilung erfasst wird, welche im Falle, dass der bereits angefallene Bedarf der Datenmenge einen vorgegebenen Grenzwert überschreitet, ausgegeben wird. Mittels des Grenzwerts kann aufwandsgünstig und bedarfsgerecht eine Bedingung formuliert werden, zu welcher die Mitteilung ausgegeben wird. Ferner sind weitere Bedingungen vorgebbar, welche mit einer Ausgabe der Mitteilung verknüpft werden können. Dadurch kann auf ein regelmäßiges Abfragen und einen damit einhergehenden zusätzlichen Verbrauch der zur Verfügung stehenden Datenmenge verzichtet werden. Vorzugsweise handelt es sich bei der Mitteilung um eine Kurzmitteilung der oben genannten Art. Dabei wird die vorgenannte Mitteilung bevorzugterweise vom Provider unter vorgegebenen Bedingungen ausgegeben.

Ferner wird eine vorteilhafte Weiterbildung vorgeschlagen, bei welcher die genannte Information mittels einer Datenverarbeitungsvorrichtung des Fahrzeugs erfasst wird. Bei der genannten Datenverarbeitungsvorrichtung kann es sich beispielsweise um einen Computer, einen Mikrocontroller, einen Prozessor oder eine andere programmierbare Hardwarekomponente handeln. Die Datenverarbeitungsvorrichtung ist zweckmäßigerweise dazu eingerichtet, Daten einzulesen, zu schreiben, zu empfangen, zu übertragen und/oder zu verwalten. Bevorzugt weist das Fahrzeug mehrere Datenverarbeitungsvorrichtungen auf, welche gemeinsam dazu eingerichtet sind, die genannte Information zu erfassen. Dadurch können freie Rechenkapazitäten verschiedener in dem Fahrzeug vorgesehener Datenverarbeitungsvorrichtungen genutzt werden. Eine solche Nutzung freier Rechenkapazitäten ist unter anderem unter der Bezeichnung "Edge Computing" bekannt. "Edge Computing" ist dabei im Sinne der Informationstechnologie zu verstehen. Insbesondere ist die Datenverarbeitungsvorrichtung oder sind die Datenverarbeitungsvorrichtungen dazu eingerichtet, die vorgenannten Mitteilungen zu empfangen und/oder eine zum Zwecke der mobilen Kommunikation bereits angefallene Datenmenge zu zählen. Auf diese Weise wird eine automatisierte Kontrolle einer bereits zum Zwecke der mobilen Kommunikation angefallenen Datenmenge ermöglicht. Eine Steuerung der Größe der zur Verfügung stehenden Datenmenge kann dadurch autark fahrzeugintern durchgeführt werden. Alternativ oder zusätzlich ist jedoch weiterhin eine Auslagerung eines Teils des Steuerungsverfahrens möglich. Beispielsweise kann ein Teil des Verfahrens mittels eines stationären Servers durchgeführt werden.

Mittels des erfindungsgemäßen Fahrzeugs ist das erfindungsgemäße Verfahren durchführbar.

Zum Zwecke einer Durchführung des erfindungsgemäßen Verfahrens weist das erfindungsgemäße Fahrzeug eine Datenverarbeitungsvorrichtung auf. Bei der genannten Datenverarbeitungsvorrichtung handelt es sich insbesondere um eine Datenverarbeitungsvorrichtung der vorbeschriebenen Art. Bevorzugt ist diese Datenverarbeitungsvorrichtung dazu eingerichtet, das erfindungsgemäße Verfahren durchzuführen. In einer bevorzugten Ausführungsvariante weist das Fahrzeug mehrere Datenverarbeitungsvorrichtungen auf, welche gemeinsam dazu eingerichtet sind, das erfindungsgemäße Verfahren durchzuführen. Dadurch kann die Steuerung der Datenmenge dezentral innerhalb des Fahrzeugs durchgeführt werden. Insbesondere kann dies mittels des vorgenannten "Edge-Computings" durchgeführt werden. Auf diese Weise kann eine ausreichende Kapazität einer Datenmenge mit einer vorbestimmten Übertragungsrate für vielfältige und temporär sich verändernde Bedürfnisse bereitgestellt werden.

In einer vorteilhaften Ausführungsvariante ist als Fahrzeug ein schienengebundenes Fahrzeug vorgesehen. Dadurch wird eine individuelle Steuerung für Fahrzeuge, welche üblicherweise in Flotten oder Verbänden organisiert sind, ermöglicht. Individuelle, automatisierte und/oder bedarfsgerechte Anpassungen von Datenmengen, welche einem jeweiligen schienengebundenen Fahrzeug zum Zwecke einer Mobilkommunikation zur Verfügung stehen, werden dadurch auf einfache und aufwandsgünstige Weise ermöglicht. Dadurch können ein Aufwand sowie Kosten kleingehalten werden.

Mittels des erfindungsgemäßen Systems ist das erfindungsgemä-ße Verfahren durchführbar.

Das erfindungsgemäße System weist das erfindungsgemäße Fahrzeug auf. Des Weiteren weist das erfindungsgemäße System einen stationären Server auf. Mittels des stationären Servers ist vorliegend die Größe der dem Fahrzeug zum Zwecke der mobilen Kommunikation zur Verfügung stehenden Datenmenge anpassbar. Bei dem vorgenannten Server kann es sich beispielsweise um einen Computer, einen Mikrocontroller, einen Prozessor oder eine andere programmierbare Hardwarekomponente handeln. Ferner ist es denkbar, dass es sich bei dem Server um eine virtualisierte Hardwareressource, eine Rechnerwolke oder um eine Laufzeitumgebung mit veränderbaren Rechen- und/oder Speicherkapazitäten handelt. Dabei soll die genannte Laufzeitumgebung im Sinne der Informatik verstanden werden. Zweckmäßigerweise ist der Server dazu eingerichtet, Daten zu lesen, zu schreiben, zu übertragen, zu empfangen und/oder zu verwalten. Mittels des stationären Servers wird eine zentrale Anpassung der Größe der zur Verfügung stehenden Datenmenge ermöglicht. Zudem kann auf diese Weise einem Betreiber des Fahrzeugs ein einfacher und zuverlässiger Überblick betreffend einen Bedarf der zum Zwecke der mobilen Kommunikation angefallenen Datenmenge verschafft werden. Ferner kann mittels des stationären Servers eine Kontrollinstanz zum Zwecke einer Überwachung der Anpassung der Datenmenge bereitgestellt werden.

Mittels des erfindungsgemäßen Computerprogramms ist das erfindungsgemäße Verfahren einfach implementierbar.

Das erfindungsgemäße Computerprogramm veranlasst bei dessen Ausführung das erfindungsgemäße Fahrzeug dazu, das erfindungsgemäße Verfahren durchzuführen. In einer alternativen Ausführungsvariante veranlasst das erfindungsgemäße Computerprogramm bei dessen Ausführung das erfindungsgemäße System dazu, das erfindungsgemäße Verfahren durchzuführen.

Des Weiteren ist erfindungsgemäß ein computerlesbares Medium vorgesehen. Dieses weist Instruktionen auf, welche das erfindungsgemäße Fahrzeug dazu veranlassen, das erfindungsgemäße Verfahren durchzuführen. In einer alternativen Ausführungsvariante weist das erfindungsgemäße computerlesbare Medium Instruktionen auf, welche das erfindungsgemäße System dazu veranlassen, das erfindungsgemäße Verfahren durchzuführen.

Bei dem computerlesbaren Medium kann es sich beispielsweise um eine CD-ROM, eine DVD, einen USB- oder Flash-Speicher oder um ein nicht körperliches Medium, wie ein Datenstrom und/oder ein digitales Trägersignal handeln.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen:
- FIG 1: ein Ausführungsbeispiel des erfindungsgemäßen Fahrzeugs in einer schematischen Darstellung sowie eine Illustration eines ersten Beispiels des erfindungsgemäßen Verfahrens;
- FIG 2: eine Illustration des im Zusammenhang mit FIG 1 beschriebenen ersten Beispiels des Verfahrens anhand eines schematischen Ablaufdiagramms;
- FIG 3: schematische Darstellung eines Ausführungsbeispiels des erfindungsgemäßen Systems sowie eine Illustration eines weiteren Beispiels des erfindungsgemäßen Verfahrens;
- FIG 4: eine Illustration des im Zusammenhang mit FIG 3 beschriebenen weiteren Beispiels des Verfahrens anhand eines schematischen Ablaufdiagramms.

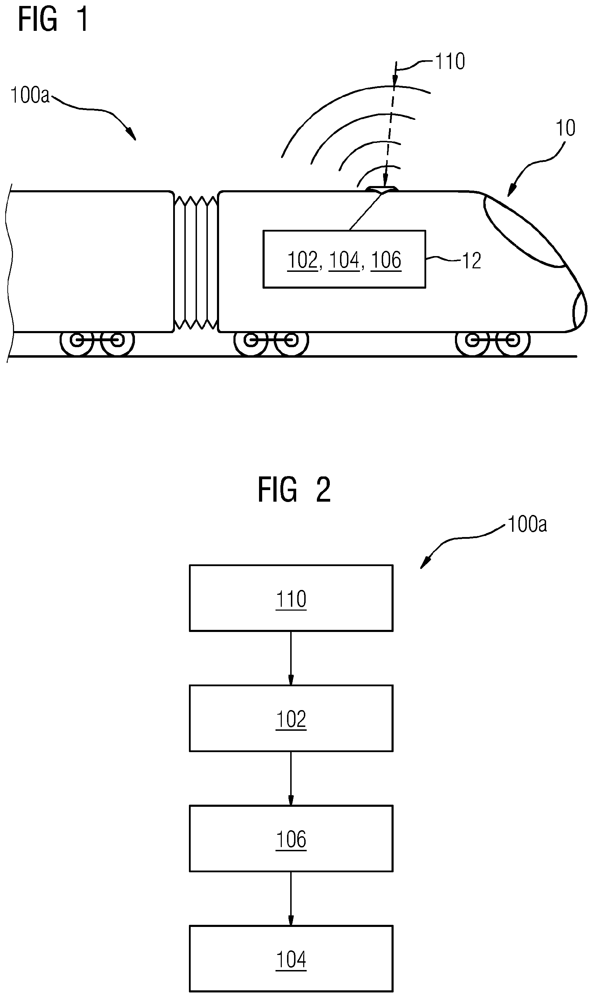

FIG 1 zeigt eine schematische Darstellung eines schienengebundenen Fahrzeugs 10. Des Weiteren illustriert FIG 1 ein erstes Beispiel eines Verfahrens 100a zur Steuerung der dem schienengebundenen Fahrzeug 10 zum Zwecke der mobilen Kommunikation mit einer vorbestimmten Datenübertragungsgeschwindigkeit zur Verfügung stehenden Datenmenge.

Das beispielhaft in FIG 1 gezeigte schienengebundene Fahrzeug 10 weist zum Zwecke einer mobilen Kommunikation eine Datenverarbeitungsvorrichtung 12 auf. Des Weiteren ist diese Datenverarbeitungsvorrichtung 12 vorliegend beispielhaft zur Steuerung einer dem schienengebundenen Fahrzeug 10 zum Zwecke der mobilen Kommunikation zur Verfügung stehenden Datenmenge eingerichtet. Im vorliegend beschriebenen ersten Beispiel des Verfahrens 100a wird mittels der Datenverarbeitungsvorrichtung 12 eine Information betreffend eine bereits zum Zwecke der mobilen Kommunikation angefallenen Datenmenge erfasst 102. Bevorzugterweise ist dabei vorgesehen, dass als die genannte Information eine Mitteilung erfasst wird 102. Diese Mitteilung wird vorliegend von einem Provider ausgeben 110 und an das betroffene schienengebundene Fahrzeug 10 übertragen, sobald ein bereits angefallener Bedarf der Datenmenge einen vorgegebenen Grenzwert überschreitet. Dadurch können einem Provider bereits vorliegende Daten einfach und aufwandsgünstig zum Zwecke der Steuerung der Datenmenge herangezogen werden. Bevorzugterweise handelt es sich bei der Mitteilung um eine Kurzmitteilung, welche mittels eines GSM-Mobilfunknetzes übertragen wird. Insbesondere handelt es sich bei der Mitteilung um eine Textmitteilung. Dadurch kann auf einfache und aufwandsgünstige Weise die genannte Information erfasst werden 102. In einer alternativen oder zusätzlichen Ausführungsvariante ist vorgesehen, dass die genannte Information mittels einer webschnittstellen basierten Abfrage erfasst wird 102. Zweckmäßigerweise erfolgt die webschnittstellen basierte Abfrage mithilfe einer Webseite des Providers. Auf Basis solcher Abfragen können zeitliche Verläufe eines Bedarfs der bereits zum Zwecke der mobilen Kommunikation angefallenen Datenmenge erfasst werden. Diese zeitlichen Verläufe ermöglichen eine Prognose eines zukünftigen Bedarfs der Datenmenge zum Zwecke der mobilen Kommunikation.

Des Weiteren ist vorgesehen, dass auf Basis der erfassten 102 Information eine Größe der zur Verfügung stehenden Datenmenge angepasst wird 104. Vorliegend wird beispielhaft vorgesehen, dass die Größe der zur Verfügung stehenden Datenmenge für die Dauer eines begrenzten Zeitraums angepasst wird 104. Anstelle eines Upgrades eines Datentarifs auf eine nächsthöhere Tarifstufe, wird vorliegend die Größe der zur Verfügung stehenden Datenmenge lediglich temporär angepasst 104. Zweckmäßigerweise wird die Größe der Datenmenge bis zum Ende eines Abrechnungszeitraums, welche üblicherweise mit dem Ende eines Monats zusammenfällt, angepasst 104. Beispielhaft wird vorliegend die Größe der Datenmenge mittels einer Hinzunahme einzelner Datenpakete angepasst 104. In einer besonders bevorzugten Ausführungsvariante des vorliegend beschriebenen Beispiels des Verfahrens 100a wird im Falle, dass die bereits zum Zwecke der Mobilkommunikation angefallene Datenmenge einen Grenzwert überschreitet, die zur Verfügung stehende Datenmenge vergrößert 104. Mittels des Grenzwerts kann frühzeitig eine Vergrößerung der zur Verfügung stehenden Datenmenge vorgesehen werden 104. Eine Anpassung 104 der Größe der Datenmenge erfolgt im vorliegenden Beispiel des Verfahrens 100a mittels einer Anwendungsschnittstelle eines Providers. Dadurch kann eine automatisierte Anpassung 104 der Größe der Datenmenge durchgeführt werden. Alternativ oder zusätzlich ist denkbar, dass die Größe der zur Verfügung stehenden Datenmenge mittels einer Kurzmitteilung angepasst wird 104. Eine solche Kurzmitteilung wird beispielhaft mittels eines GSM-Mobilfunknetzes an den Provider übertragen. In dieser Kurzmitteilung werden zweckmäßigerweise Informationen betreffend eine gewünschte Größe der zur Verfügung stehenden Datenmenge und/oder ein gewünschter Zeitpunkt der Anpassung 104 der Grö-ße der zur Verfügung stehenden Datenmenge an den Provider übermittelt.

In einer weiteren bevorzugten Ausführungsvariante des Verfahrens 100a ist vorgesehen, dass ein zukünftiger Bedarf einer zum Zwecke der mobilen Kommunikation erforderlichen Datenmenge prognostiziert wird 106. Einer solchen Prognose 106 können beispielsweise Fahrpläne, Wartungspläne, Servicepläne und/oder Dienstpläne des schienengebundenen Fahrzeugs 10 zugrunde gelegt werden. Des Weiteren können zum Zwecke der Prognose 106 des zukünftigen Bedarfs die infolge der webschnittstellen basierten Abfrage ermittelten zeitlichen Verläufe des bereits angefallenen Bedarfs der Datenmenge erfolgen. Auf Basis des prognostizierten 106 zukünftigen Bedarfs der erforderlichen Datenmenge sowie der erfassten 102 Information wird sodann die Größe der zur Verfügung stehenden Datenmenge angepasst 104. Auf diese Weise kann eine zukünftig erforderliche Größe der zur Verfügung stehenden Datenmenge zuverlässig und aufwandsgünstig abgeschätzt werden. Dadurch kann auf eine einfache Weise die Anpassung 104 der Größe der zur Verfügung stehenden Datenmenge basierend auf einer quantifizierten Datenmenge erfolgen.

FIG 2 illustriert das im Zusammenhang mit FIG 1 beschriebene erste Beispiel des Verfahrens 100a anhand eines schematischen Ablaufdiagramms.

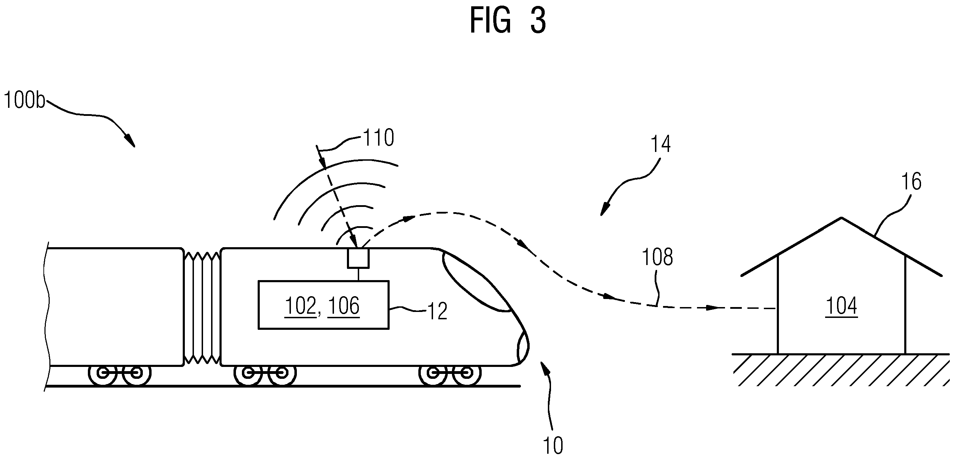

FIG 3 zeigt ein schematisches Ausführungsbeispiel eines Systems 14, welches einen stationären Server 16 sowie das im Zusammenhang mit FIG 1 beschriebene schienengebundene Fahrzeug 10 aufweist. Des Weiteren illustriert FIG 3 ein weiteres Beispiel eines Verfahrens 100b zur Steuerung einer dem schienengebundenen Fahrzeug 10 zum Zwecke einer mobilen Kommunikation mit einer vorbestimmten Übertragungsgeschwindigkeit zur Verfügung stehenden Datenmenge.

Das im Zusammenhang mit FIG 3 illustrierte weitere Beispiel des Verfahrens 100b sieht im Unterschied zu dem im Zusammenhang mit FIG 1 und FIG 2 beschriebenen ersten Beispiel des Verfahrens 100a vor, dass die Größe der Datenmenge ausgehend von dem stationären Server 16 angepasst wird 104. Zu diesem Zweck wird die Information betreffend die bereits zum Zwecke der mobilen Kommunikation angefallenen Datenmenge auf die im Zusammenhang mit FIG 1 und FIG 2 beschriebene Weise erfasst 102. Daraufhin wird die erfasste 102 Information an den stationären Server 16 ausgegeben 108. Dies ermöglicht es einem Betreiber des schienengebundenen Fahrzeugs 10, zentral mittels des stationären Servers 16 zu entscheiden, ob und in welchem Umfang die Größe der Datenmenge angepasst wird 104. Des Weiteren wird einem Betreiber des schienengebundenen Fahrzeugs 10 dadurch eine zusätzliche Kontrolle und eine Übersicht betreffend die dem schienengebundenen Fahrzeug 10 zum Zwecke einer mobilen Kommunikation zur Verfügung stehenden Datenmenge ermöglicht.

Im Übrigen entspricht das weitere Beispiel des Verfahrens 100b beispielhaft dem im Zusammenhang mit FIG 1 und FIG 2 beschriebenen ersten Beispiel des Verfahrens 100a. Insbesondere erfolgt die Anpassung 104 der Größe der dem schienengebundenen Fahrzeug 10 zur Verfügung stehenden Datenmenge als solche auf die im Zusammenhang mit dem ersten Beispiel des Verfahrens 100a beschriebene Weise.

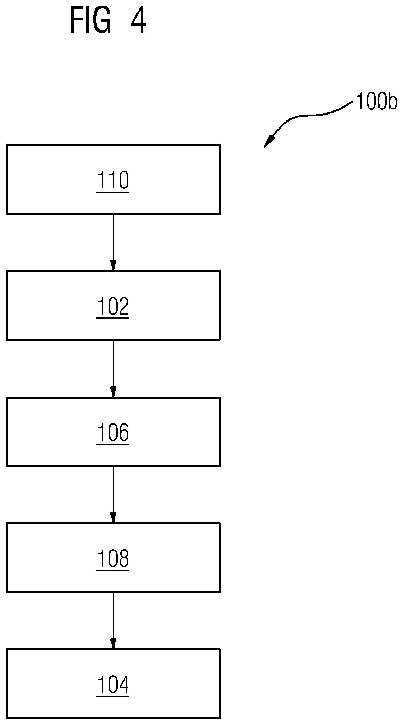

FIG 4 illustriert das im Zusammenhang mit FIG 3 beschriebene weitere Beispiel des Verfahrens 100b anhand eines schematischen Ablaufdiagramms.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (100a, 100b) zur Steuerung einer einem Fahrzeug (10) zum Zwecke einer mobilen Kommunikation mit einer vorbestimmten Datenübertragungsgeschwindigkeit zur Verfügung stehenden Datenmenge,
bei welchem
- eine Information betreffend eine bereits zum Zwecke der mobilen Kommunikation angefallene Datenmenge erfasst wird (102) ;
- auf Basis der erfassten (102) Information eine Größe der zur Verfügung stehenden Datenmenge angepasst wird (104).

2. Verfahren (100a, 100b) nach Anspruch 1,
bei welchem die Größe der zur Verfügung stehenden Datenmenge für die Dauer eines begrenzten Zeitraums angepasst wird (104) .

3. Verfahren (100a, 100b) nach Anspruch 1 oder 2,
bei welchem im Falle, dass die bereits zum Zwecke der mobilen Kommunikation angefallene Datenmenge einen Grenzwert überschreitet, die zur Verfügung stehende Datenmenge vergrößert wird (104).

4. Verfahren (100a, 100b) nach einem der vorhergehenden Ansprüche,
bei welchem die Größe der Datenmenge mittels einer Anwendungsschnittstelle eines Providers angepasst wird (104).

5. Verfahren (100a, 100b) nach einem der vorhergehenden Ansprüche,
bei welchem die Größe der zur Verfügung stehenden Datenmenge mittels einer Kurzmitteilung, vorzugsweise an den Provider, angepasst wird (104).

6. Verfahren (100a, 100b) nach einem der vorhergehenden Ansprüche,
bei welchem
- ein zukünftiger Bedarf einer zum Zwecke der mobilen Kommunikation erforderlichen Datenmenge prognostiziert wird (106);
- auf Basis des prognostizierten zukünftigen Bedarfs der erforderlichen Datenmenge sowie der erfassten Information die Größe der zur Verfügung stehenden Datenmenge angepasst wird (104) .

7. Verfahren (100b) nach einem der vorhergehenden Ansprüche, bei welchem
- die erfasste Information an einen stationären Server (16) ausgegeben wird (108);
- ausgehend von dem stationären Server (16) auf Basis der erfassten (102) Information die Größe der Datenmenge angepasst wird (104).

8. Verfahren (100a, 100b) nach einem der vorhergehenden Ansprüche,
bei welchem die genannte Information mittels einer webschnittstellen basierten Abfrage, vorzugsweise beim Provider, erfasst wird (102).

9. Verfahren (100a, 100b) nach einem der vorhergehenden Ansprüche,
bei welchem als die genannte Information eine Mitteilung erfasst wird (102), welche im Falle, dass der bereits angefallene Bedarf der Datenmenge einen vorgegebenen Grenzwert überschreitet, ausgegeben wird (110).

10. Verfahren (100a, 100b) nach einem der vorhergehenden Ansprüche,
bei welchem die genannte Information mittels einer Datenverarbeitungsvorrichtung (12) des Fahrzeugs (10) erfasst wird (102) .

11. Fahrzeug (10) aufweisend
eine Datenverarbeitungsvorrichtung (12), mittels welcher das Verfahren (100a, 100b) nach einem der vorhergehenden Ansprüche durchführbar ist.

12. Fahrzeug (10) nach Anspruch 11,
**dadurch gekennzeichnet, dass**
als Fahrzeug (10) ein schienengebundenes Fahrzeug vorgesehen ist.

13. System (14) aufweisend ein Fahrzeug (10) gemäß einem der Ansprüche 11 oder 12 sowie einen stationären Server (16), mittels welchem die Größe der dem Fahrzeug (10) zum Zwecke der mobilen Kommunikation zur Verfügung stehenden Datenmenge anpassbar ist.

14. Computerprogramm, welches bei dessen Ausführung das Fahrzeug (10) nach einem der Ansprüche 11 oder 12 dazu veranlasst, das Verfahren (100a, 100b) nach einem der Ansprüche 1 bis 10 durchzuführen oder welches bei dessen Ausführung das System (14) nach Anspruch 13 dazu veranlasst, das Verfahren (100a, 100b) nach einem der Ansprüche 1 bis 10 durchzuführen.

15. Computerlesbares Medium, aufweisend Instruktionen, welche das Fahrzeug (10) nach einem der Ansprüche 11 oder 12 dazu veranlassen, das Verfahren (100a, 100b) nach einem der Ansprüche 1 bis 10 durchzuführen oder welche das System (14) nach Anspruch 13 dazu veranlasst, das Verfahren (100a, 100b) nach einem der Ansprüche 1 bis 10 durchzuführen.
